# EUROPÄISCHE PATENTANMELDUNG

(11) **EP 2 218 594 A1**
(43) Veröffentlichungstag der Anmeldung: **18.08.2010**
(21) Anmeldenummer: 09177431.5
(22) Anmeldetag: 30.11.2009
(51) Int. Cl.: B60G 11/28, F16F 9/05

(54) **Torsionslager für Luftfeder**

(30) Priorität: 13.02.2009 DE 102009003476
(71) Anmelder: Continental Aktiengesellschaft, 30165 Hannover (DE)
(72) Erfinder: Rosner, Dirk, 30826, Garbsen (DE)
(74) Vertreter: Finger, Karsten

(57) **Zusammenfassung**

Luftfeder mit einer von einem Luftfederbalg aus elastomerem Material mindestens teilweise umschlossenen Arbeitskammer, wobei der Luftfederbalg unter Bildung einer Rollfalte an seinem einen Ende mit einem Luftfederkolben und an seinem anderen Ende mit einem Luftfederdeckel (D) fest verbunden ist und die Verbindung zwischen Luftfederbalg und Luftfederdeckel (D) aus mehreren ringförmigen Lagerteilen (A,R,D) bestehendes Lagerpaket ausgebildet ist, wobei die ringförmigen Lagerteile in ihrem Durchmesser im Wesentlichen dem effektiven Durchmesser der Luftfeder entsprechen.

## Beschreibung

Die Erfindung betrifft eine Luftfeder mit einer von einem Luftfederbalg aus elastomerem Material mindestens teilweise umschlossenen Arbeitskammer, wobei der Luftfederbalg unter Bildung einer Rollfalte an seinem einen Ende mit einem Luftfederkolben und an seinem anderen Ende mit einem Luftfederdeckel fest verbunden ist.

Luftfedern, die zwischen Fahrwerk und Karosserie eingespannt sind und die einen Luftfederbalg aufweisen, der wiederum zwischen einem üblicherweise karosserieseitigen Luftfederdeckel und einem fahrwerkseitigen Abrollkolben befestigt sind, kennt der Fachmann in einer Vielzahl von Ausführungen. Die Luftfeder steht im Betrieb unter einem inneren Überdruck. Der Luftfederbalg rollt unter Last und bei Federbewegungen unter Bildung einer Rollfalte auf der Außenkontur eines konzentrischen Bauteiles ab, üblicherweise auf dem Luftfederkolben/Abrollkolben. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Abrollkolben, als auch Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Luftfederbälge reagieren empfindlich auf eine durch Verdrehung des Deckels gegenüber dem Kolben hervorgerufene Torsionsbeanspruchung. Diese Beanspruchung kann durch die Achskinematik induziert werden oder durch den Balgaufbau an sich entstehen.

Im Stand der Technik sind bereits Lösungen bekannt, durch die eine solche Torsionsbeanspruchung verhindert werden kann. So offenbart die DE 10 2004 048 828 A1 eine Luftfeder mit einem Kugelgelenk, über das der Abrollkolben mit dem Schwingungsdämpfer und damit mit dem Fahrwerk verbunden ist. So wird eine Verdrehung des Deckels gegenüber dem Kolben zwar grundsätzlich verhindert, jedoch ist ein solches Kugelgelenk nachteilig im Hinblick auf den erforderlichen Bauraum (Packaging) und im Hinblick auf die Komplexität und Kosten einer solchen Konstruktion.

Bei kleinen Federwegen, also etwa bei einer nur vom Luftfederbalg getragenen Einfederung, ist zudem eine auf den Balg wirkende Torsionsspannung auch noch relativ unkritisch und beeinflusst die Lebensdauer wenig. Dies ändert sich jedoch dann, wenn in ungünstiger Situation die Verdrehbarkeit der beiden Bauteile gegeneinander blockiert ist. Dieser Fall tritt insbesondere dann auf, wenn durch die Zusatzfeder eine kraftschlüssige Verbindung zwischen Luftfederdeckel und Luftfederkolben entsteht, wenn also eine Kraftübertragungskette bei Anlage der Bauteile Luftfederdeckel, Luftfederkolben und Zusatzfeder entsteht.

Wenn nun in der oben genannten ungünstigen Situation, bei der durch die Zusatzfeder eine kraftschlüssige Verbindung zwischen Luftfederdeckel und Luftfederkolben entsteht, eine weitere Einfederung (großer Federweg) und damit eine verstärkte selbstinduzierte Torsion erfolgt, muss die gesamte entstehende Torsionspannung in dem Material des Luftfederbalges aufgefangen werden, da aufgrund der kraftschlüssigen Verbindung über die Zusatzfeder eine Drehung und damit ein Ausgleichen der Torsion zwischen Luftfederkolben und Luftfederdeckel gesperrt ist.

Tritt dieser Zustand häufig ein, kann die Lebensdauer des Luftfederbalges ernsthaft in Mitleidenschaft gezogen werden.

Für die Erfindung bestand daher die Aufgabe, eine Luftfeder bereitzustellen bei der die auf einen Luftfederbalg, einwirkenden Torsionsbeanspruchungen minimiert werden, auch und gerade wenn die Einfederung groß wird und die Zusatzfeder in Eingriff kommt. Zudem soll die Luftfeder konstruktiv möglichst einfach aufgebaut sein.

Torsionsbeanspruchung von Luftfedern stellen hohe Anforderungen an diese. Zur Kompensation dieser Winkel wurden bisher z.B. Federbeinstützlager eingesetzt. Diese sind bis zu einer bestimmten Torsion einsetzbar. Jedoch hat sich gezeigt, dass die Abstimmung dieser Gummilager auf die jeweilige Luftfederausführung sehr aufwendig und nur begrenzt möglich ist.

Weitere mögliche Ausführungen sind bekannt. Direkt unter dem Luftfederdeckel einer freistehenden Luftfeder oder in der Entwicklung befindlich zwischen dem Luftfederkolben und dem Dämpfer einer geführten Feder.

Dieser Einbauort ist aber mit dem Nachteil behaftet, dass dort auch die hohen Zusatzfederkräfte und die ganze Traglast der Luftfeder übertragen werden müssen. Diese Belastung führt zu hohen Reibmomenten

Gelöst wird die Aufgabe durch die Merkmale des Hauptanspruchs. Weitere vorteilhafte Ausbildungen sind in den abhängigen Unteransprüchen offenbart.

Dabei ist dass die Verbindung zwischen Luftfederbalg und Luftfederdeckel aus mehreren ringförmigen Lagerteilen bestehendes Lagerpaket ausgebildet, wobei die ringförmigen Lagerteile in ihrem Durchmesser im Wesentlichen dem effektiven Durchmesser der Luftfeder entsprechen.

Durch den Einsatz eines solchen Lagerpaketes wird der negative Einfluss der Verdrehung verringert.

Durch den Einsatz eines Torsionslagers an einem Luftfederdeckel ergeben sich niedrige zu tragende Lasten und somit eine reduzierte, d.h. sehr geringe Reibungen mit hieraus resultierenden niedrigen Momenten. Wenn der Durchmessser des Lagers bzw. der Lagerringe auf einem Durchmesser festgelegt ist, der dem effektiven Durchmesser der Luftfeder sehr nahe ist.

### Anhand eines Ausführungsbeispieles soll die Erfindung näher erläutert werden. Es zeigen:

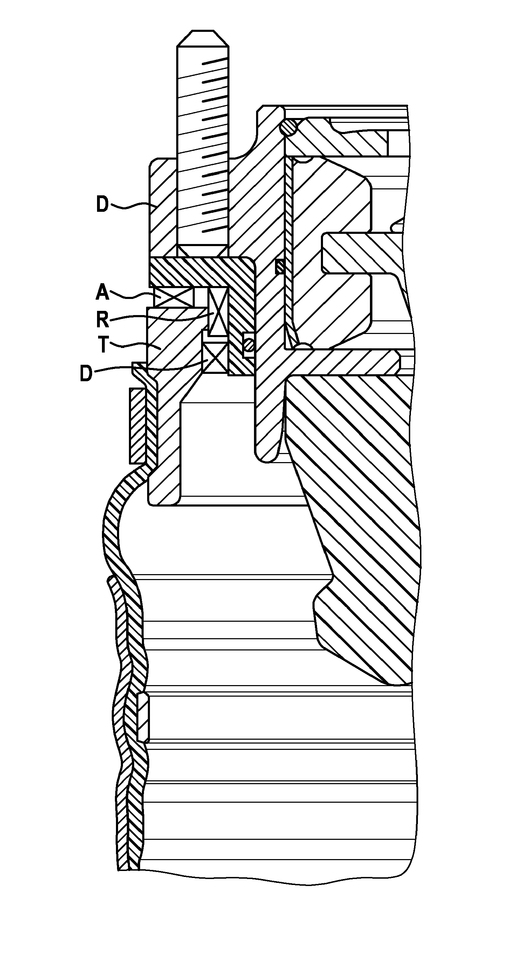

- Fig. 1: eine erfindungsgemäße Luftfeder

Die Fig. 1 zeigt hierzu eine erfindungsgemäße Luftfeder, die einen oben angeordneten Luftfederdeckel, einen hier nicht näher dargestellten Luftfederkolben und einen als Kreuzlagenbalg ausgebildeten Luftfederbalg aufweist. Die hier dargestellte Ausführungsform weist eine Außenführung auf. Selbstverständlich kann die gezeigte Ausführung auch ohne Außenführung für den Luftfederbalg versehen werden.

Der Luftfederbalg aus elastomerem Material umschließt mindestens teilweise die Arbeitskammer, wobei der Luftfederbalg unter Bildung einer Rollfalte an seinem einen Ende mit einem Luftfederkolben und an seinem anderen Ende mit einem Luftfederdeckel fest verbunden ist. Die Verbindung zwischen Luftfederbalg und Luftfederdeckel ist als aus mehreren ringförmigen Lagerteilen bestehendes Lagerpaket ausgebildet, wobei die ringförmigen Lagerteile in ihrem Durchmesser im Wesentlichen dem effektiven Durchmesser der Luftfeder entsprechen.

Das Lagerpaket zwei Ringe beinhalten, von denen einer ausschließlich die axialen (A) und einer ausschließlich die radialen (R) auf die Verbindung wirkenden Kräfte überträgt.

Die ringförmigen Lagerteilen sind zwischen einem mit der Luftfeder verbunden Tragring (T) und dem Luftfederdeckel (D) angeordnet.

Das Lagerpaket besteht aus folgenden Teilen:
- einem an den Luftfederdeckel (D) anschließenden und im Querschnitt rechtwinklig nach außen geöffneten Flansch (F), sowie
- einen ausschließlich die axialen Lagerkräfte aufnehmende Lagerring (A),
- einen ausschließlich die radialen Lagerkräfte aufnehmende Lagerring (R),
- einer zwischen Flansch (F) und Tragring (T) angeordnete Dichtung (D) und einer zwischen Flansch (F) und Luftfederdeckel angeordnete O-Ring-Dichtung.

## Patentansprüche

1. Luftfeder mit einer von einem Luftfederbalg aus elastomerem Material mindestens teilweise umschlossenen Arbeitskammer, wobei der Luftfederbalg unter Bildung einer Rollfalte an seinem einen Ende mit einem Luftfederkolben und an seinem anderen Ende mit einem Luftfederdeckel fest verbunden ist, **dadurch gekennzeichnet, dass** die Verbindung zwischen Luftfederbalg und Luftfederdeckel aus mehreren ringförmigen Lagerteilen bestehendes Lagerpaket ausgebildet ist, wobei die ringförmigen Lagerteile in ihrem Durchmesser im Wesentlichen dem effektiven Durchmesser der Luftfeder entsprechen.

2. Luftfeder nach Anspruch 1, **dadurch gekennzeichnet, dass** das Lagerpaket zwei Ringe beinhalten, von denen einer ausschließlich die axialen (A) und einer ausschließlich die radialen (R) auf die Verbindung wirkenden Kräfte überträgt.

3. Luftfeder nach einem der Ansprüche 1 oder 2, **dadurch gekennzeichnet, dass** die ringförmigen Lagerteilen zwischen einem mit der Luftfeder verbunden Tragring (T) und dem Luftfederdeckel (D) angeordnet sind.

4. Luftfeder nach einem der Ansprüche 1 bis 3, **dadurch gekennzeichnet, dass** das Lagerpaket
a) einen an den Luftfederdeckel (D) anschließenden und im Querschnitt rechtwinklig nach außen geöffneten Flansch (F) aufweist, sowie
b) einen ausschließlich die axialen Lagerkräfte aufnehmende Lagerring (A),
c) einen ausschließlich die radialen Lagerkräfte aufnehmende Lagerring (R),
d) eine zwischen Flansch (F) und Tragring (T) angeordnete Dichtung (D) und
e) eine zwischen Flansch (F) und Luftfederdeckel angeordnete O-Ring-Dichtung aufweist.

5. Luftfeder nach einem der Ansprüche 1 bis 4, **dadurch gekennzeichnet, dass** die ringförmigen Lagerteilen aus Gummi bestehen.
